# EUROPÄISCHE PATENTSCHRIFT

(11) **EP 1 501 654 B1**
(45) Veröffentlichungstag und Bekanntmachung des Hinweises auf die Patenterteilung: **17.02.2010**
(21) Anmeldenummer: 03725170.9
(22) Anmeldetag: 07.05.2003
(51) Int. Cl.: B23Q 11/00

(54) **GEWICHTSAUSGLEICHSVORRICHTUNG**
WEIGHT-COMPENSATING DEVICE
DISPOSITIF DE COMPENSATION DE POIDS

(30) Priorität: 08.05.2002 DE 10220617
(43) Veröffentlichungstag der Anmeldung: 02.02.2005
(73) Patentinhaber: P & L GmbH & Co. KG, 20148 Hamburg (DE)
(72) Erfinder: RÖDERS, Jürgen, 20148 Hamburg (DE)
(74) Vertreter: Weber, Joachim
(86) Internationale Anmeldenummer: PCT/EP2003/004796
(87) Internationale Veröffentlichungsnummer: WO 2003/095143

(56) Entgegenhaltungen:
- EP-A- 1 047 102
- DE-A- 10 038 013
- US-A- 3 327 571

## Beschreibung

Die Erfindung bezieht sich auf eine Gewichtsausgleichsvorrichtung für einen Werkzeugschlitten einer Werkzeugmaschine gemäß dem Oberbegriff des Anspruchs 1.

Auf dem Gebiet der Werkzeugmaschinen ist es nötig, teilweise relativ schwere Bauteile in vertikaler Richtung entgegen ihrer Gewichtskraft bzw. entgegen der Schwerkraft zu verfahren und/oder präzise zu halten.

Es sind vielfältige Konstruktionen vorbekannt, bei denen eine Gewichtsausgleichsvorrichtung eingesetzt wird, um zumindest einen Teil der Gewichtskraft/Schwerkraft des Bauteils auszugleichen und um gleichzeitig den Antrieb zu entlasten. Die Lösungen umfassen beispielsweise Gegengewichte, die beispielsweise über eine Umlenkrolle und ein Seil oder Ähnliches gehalten werden. Weitere Konstruktionen zeigen hydraulische oder pneumatische Lösungen.

Die vorbekannten Lösungen zeichnen sich durch den Nachteil aus, dass bei der Verwendung eines Gegengewichts die Summe der zu bewegenden Massen erheblich erhöht ist, da zu der Masse des Bauteils noch die Masse der Gewichtsausgleichsvorrichtung zu addieren ist.

Die insgesamt erhöhte Gesamtmasse bringt erhebliche Probleme im Hinblick auf die Massenträgheit des Bauteils mit sich. So ist es insbesondere nicht möglich, Beschleunigungen über 1 g zu verfahren, da ansonsten Beschädigungen der Gewichtsausgleichsvorrichtung bzw. Beeinträchtigungen ihrer Funktionssicherheit auftreten. Insbesondere bei Seilzügen oder Ähnlichem können diese dann nicht mehr unter Spannung gehalten werden.

Weitere Probleme bestehen hinsichtlich der auftretenden Beschleunigungen und der erforderlichen Abbremsungen.

Bei hydraulischen und pneumatischen Lösungen ergibt sich durch die eingesetzten Hydraulikzylinder oder Pneumatikzylinder eine zusätzliche Reibung bei der Bewegung des Bauteils, die durch den Antrieb kompensiert werden muss. Zusätzliche Reibungen ergeben sich durch die Kolbendichtungen derartiger Kolben-Zylinder-Anordnungen.

Insgesamt ergibt sich somit stets das Problem, dass bei einer Richtungsumkehr der Bewegung des Bauteils ganz erhebliche Reibungen überwinden werden müssen und dass es erforderlich ist, erhebliche, zusätzliche Massen zu beschleunigen bzw. abzubremsen.

Insbesondere bei Werkzeugmaschinen, bei denen mehrdimensionale Arbeitsbewegungen erzeugt werden sollen, ergeben sich hieraus unerwünschte Fehler, beispielsweise die sogenannten Quadrantensprünge bei Kreisen.

Weitere Nachteile ergeben sich im Hinblick auf die bei modernen Werkzeugmaschinen eingesetzten Linearantriebe. Derartige Linearantriebe/Linearmotoren können nur geringe Haltekräfte aufbringen, so dass bei vertikal verfahrbaren Bauteilen ein Gewichtsausgleich sowie Maßnahmen zur jeweiligen Halterung unumgänglich sind.

Aus der EP-A-1047102 ist ein lonenimplantierer mit einem Vakuum-Gewichtsausgleich in Form eines Kolben-Zylinder-Systems bekannt.

Der Erfindung liegt die Aufgabe zugrunde, eine Gewichtsausgleichsvorrichtung der Eingangs genannten Art zu schaffen, welche bei einfachem Aufbau und günstigen Herstellungskosten unter Vermeidung der Nachteile des Standes der Technik einen Gewichtsausgleich auch bei großer Dynamik der Bewegung des Bauteils ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass zusätzlich zwischen dem Träger und dem Bauteil zumindest ein längenveränderbarer Unterdruckkörper in Form eines Vakuumschlauchs angeordnet ist, welcher zum Ausgleich der auf das Bauteil wirkenden Gewichtskraft mit einer Unterdruckquelle verbunden ist.

Die erfindungsgemäße Gewichtsausgleichsvorrichtung zeichnet sich durch eine Reihe erheblicher Vorteile aus.

Zunächst ist festzustellen, dass die erfindungsgemäße Lösung praktisch keine Reibung verursacht, so dass auch bei sehr dynamischen Bewegungen des Bauteils, die beispielsweise mit Linearantrieben versehen sind, eine hohe Positioniergenauigkeit erzielt werden kann. Hieraus folgt bei Werkzeugmaschinen eine sehr hohe Konturtreue bei derartigen sehr dynamischen Achseinheiten oder Achsen, welche das genannte Bauteil umfassen.

Der Unterdruckkörper ist in Form eines Vakuumschlauchs ausgebildet. Es können einer oder mehrere derartige Vakuumschläuche so an dem Bauteil angebracht werden, dass diese einen Teil oder die gesamte Gewichtskraft des Bauteils kompensieren.

Derartige Vakuumschläuche sind sehr kostengünstig herstellbar. Es handelt sich um übliche, standardisierte Bauelemente. Vakuumschläuche sind beispielsweise für das Heben und Transportieren im Rahmen der Transporttechnik bekannt. Sie können ihre Länge in weiten Bereichen verändern, wobei ein Kollabieren des Vakuumschlauchs aufgrund des äußeren Luftdrucks durch eine Spiralfeder oder Ähnliches, die in die Wandung des Vakuumschlauchs eingebracht wird, um den Vakuumschlauch zu stabilisieren, vermieden wird. Das Vakuum in dem Vakuumschlauch wirkt somit nur in axialer Richtung.

Der Unterdruckkörper beeinträchtigt somit nicht die Verfahrbarkeit oder Bewegung des Bauteils, sondern kompensiert lediglich dessen Schwerkraft oder Gewichtskraft. Somit sind auch sehr schnelle, hochdynamische Bewegungen möglich, die zu einer sehr hohen Konturtreue bei der Bearbeitung von Werkstücken führen.

Bevorzugterweise ist die Unterdruckquelle über einen Speicher mit dem Unterdruckkörper verbunden. Da der Unterdruck (das Vakuum) in dem Unterdruckkörper aus technischen Gründen nicht beliebig reduzierbar ist, bildet der Speicher mit seinem erheblich größeren Volumen einen Puffer. Bevorzugterweise ist der Speicher mit dem Unterdruckkörper über eine Leitung geringen Querschnitts, beispielsweise einen kleinen Verbindungsschlauch, verbunden, der für einen ständigen Druckausgleich zwischen dem Speicher und dem Unterdruckkörper sorgt. Größere Volumenänderungen in dem Unterdruckkörper (Vakuumschlauch) beim Verfahren des Bauteils wirken sich somit nur geringfügig auf den Gesamtdruck des Vakuums in dem Unterdruckkörper und dem Speicher aus, da insgesamt ein sehr großes Volumen des Gesamtsystems vorliegt. Dieses ändert sich durch die Kompression bzw. Dekompression des Unterdruckkörpers somit nur sehr wenig.

Ein weiterer, wesentlicher Vorteil der Erfindung ergibt sich aus dem guten thermischen Verhalten. Die erfindungsgemäße Gewichtsausgleichsvorrichtung führt somit nicht zu unerwünschten Erwärmungen bestimmter Teile des Gesamtsystems, welche wiederum die Präzision der Bewegung einschränken könnten. Da nur sehr geringe Luftmassen zwischen dem Unterdruckkörper und dem Speicher bewegt werden, wird auch bei einem lang andauernden, schnellen reversierenden Verfahren des Bauteils die Luft nur geringfügig erwärmt. Auch die geringe Reibung des Unterdruckkörpers (Vakuumschlauchs) trägt dazu bei, dass praktisch keine Erwärmung des Unterdruck-Volumens auftritt, auch bei sehr hoher Beanspruchung.

Im Folgenden wird die Erfindung anhand eines Ausführungsbeispiels in Verbindung mit der Zeichnung beschrieben. Dabei zeigt:

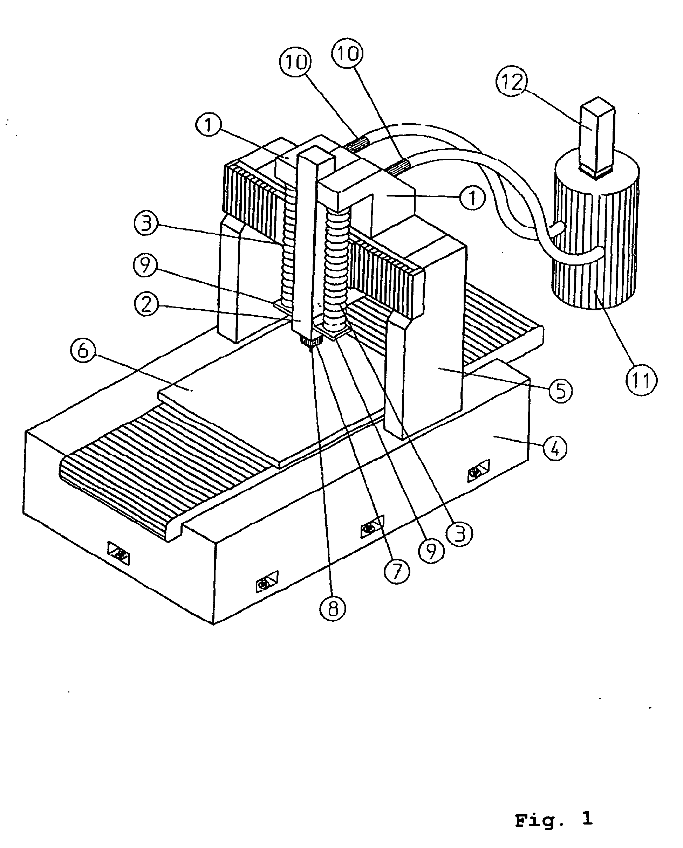

- Fig. 1: eine perspektivische, vereinfachte Darstellung einer Werkzeugmaschine unter Verwendung der erfindungsge- mäßen Gewichtsausgleichsvorrichtung.

Die Fig. 1 zeigt in schematischer, perspektivischer Darstellung eine Werkzeugmaschine mit einem Maschinenbett 4, an welchem ein Portal 5 gelagert ist. An dem Maschinenbett 4 ist verfahrbar ein Tisch 6 angeordnet, der ein nicht dargestelltes Werkstück tragen kann.

Das Portal 5 lagert einen Träger 1, der seitlich verfahrbar ist. An dem Träger 1 wiederum ist ein vertikal verfahrbares Bauteil 2 gelagert, welches eine Achseinheit mit einer Spindel 7 und einem Werkzeug 8 umfasst. Die jeweiligen Antriebe sind zur Verdeutlichung der Darstellung nicht im Einzelnen gezeigt. Aus den sich ergebenden Bewegungsbahnen ergibt sich, dass das Werkzeug 8 in zumindest drei Achsen relativ zu einem Werkstück bewegbar ist.

Wie erwähnt, ist die Achseinheit (Bauteil 2) vertikal relativ zu dem Träger 1 bewegbar. Sie umfasst seitliche untere Streben 9, an denen jeweils ein Unterdruckkörper 3 (Vakuumschlauch) befestigt ist. Das obere Ende des Unterdruckkörpers 3 (Vakuumschlauch) ist an dem Träger 1 befestigt. Die Einbringung eines Vakuums in den Unterdruckkörper 3 erfolgt über Anschlüsse 10, die beispielsweise in Form von Schläuchen ausgebildet sein können und an dem Träger 1 befestigt sind. Die Schläuche geringen Querschnitts münden in einem Speicher (11) oder Tank. Das Bezugszeichen (12) kennzeichnet einen Antrieb bzw. eine Vakuumpumpe.

Aus der Darstellung der Fig. 1 ergibt sich, dass durch die symmetrische Anordnung der beiden Unterdruckkörper (Vakuumschläuche) 3 die Gewichtskraft der Achseinheit 2 ausgleichbar bzw. kompensierbar ist.

## Patentansprüche

1. Gewichtsausgleichsvorrichtung für einen Werkzeugschlitten einer Werkzeugmaschine, mit einem Träger (1) sowie mit einem an dem Träger (1) gelagerten, insbesondere vertikal mittels eines Antriebs verfahrbaren Bauteils (2), wobei der Träger (1) und das Bauteil (2) als Teil einer Werkzeugmaschine ausgebildet sind und das Bauteil (2) eine Antriebseinheit umfasst, **dadurch gekennzeichnet, dass** zusätzlich zwischen dem Träger (1) und dem Bauteil (2) zumindest ein längenveränderbarer Unterdruckkörper (3) in Form eines Vakuumschlauchs angeordnet ist, welcher zum Ausgleich der auf das Bauteil (2) wirkenden Gewichtskraft mit einer Unterdruckquelle verbunden ist.

2. Gewichtsausgleichsvorrichtung nach Anspruch 1, **dadurch gekennzeichnet, dass** mehrere Vakuumschläuche vorgesehen sind.

3. Gewichtsausgleichsvorrichtung nach einem der Ansprüche 1 oder 2, **dadurch gekennzeichnet, dass** die Unterdruckquelle über einen Speicher (11) mit dem Unterdruckkörper (3) verbunden ist.

4. Gewichtsausgleichsvorrichtung nach Anspruch 3, **dadurch gekennzeichnet, dass** der Speicher (11) über eine Leitung geringen Querschnitts mit dem Unterdruckkörper (3) verbunden ist.

5. Gewichtsausgleichsvorrichtung nach einem der Ansprüche 1 bis 4, **dadurch gekennzeichnet, dass** die Achseinheit zumindest vertikal verfahrbar ist.

6. Gewichtsausgleichsvorrichtung nach einem der Ansprüche 1 bis 5, **dadurch gekennzeichnet, dass** die Achseinheit zumindest einen Linearantrieb umfasst.

## Claims

1. A weight compensating device for a tool carriage of a machine tool, comprising a carrier (1) as well as a component (2) which is supported on the carrier (1) and is displaceable in particular vertically by a drive, the carrier (1) and the component (2) being configured as part of a machine tool and the component (2) including a drive unit, **characterized in that** at least one negative pressure body (3) of a variable length is additionally disposed between the carrier (1) and the component (2) in the form of a vacuum hose which is connected to a negative pressure source for compensating the weight acting on the component (2).

2. The weight compensating device according to claim 1, **characterized in that** a plurality of vacuum hoses is provided.

3. The weight compensating device according to one of claims 1 or 2, **characterized in that** the negative pressure source is connected via an accumulator (11) to the negative pressure body (3).

4. The weight compensating device according to claim 3, **characterized in that** the accumulator (11) is connected via a line of small cross-section to the negative pressure body (3).

5. The weight compensating device according one of claims 1 to 4, **characterized in that** the axial unit is movable at least vertically.

6. The weight compensating device according to one of claims 1 to 5, **characterized in that** the axial unit comprises at least one linear drive.

## Revendications

1. Dispositif d'équilibrage de poids pour un chariot porte-outil d'un machine-outil, comportant un support (1) et une pièce (2), montée contre le support (1), en particulier de manière mobile verticalement au moyen d'une système d'entraînement, le support (1) et la pièce (2) étant réalisés sous la forme d'une partie d'une machine-outil et la pièce (2) comportant une unité d'entraînement, **caractérisé en ce que**, en plus, entre le support (1) et la pièce (2) est monté au moins un corps de dépression (3) réglable en longueur, en forme de tuyau flexible sous vide, qui est relié à une source de dépression pour l'équilibrage du poids exercé sur la pièce (2).

2. Dispositif d'équilibrage de poids selon la revendication 1, **caractérisé en ce qu'**il est prévu plusieurs tuyaux flexibles sous vide.

3. Dispositif d'équilibrage de poids selon la revendication 1 ou 2, **caractérisé en ce que** la source de dépression est reliée au corps de dépression (3) par l'intermédiaire d'une unité de stockage (11).

4. Dispositif d'équilibrage de poids selon la revendication 3, **caractérisé en ce que** l'unité de stockage (11) est reliée au corps de dépression (3) via une conduite à faible section.

5. Dispositif d'équilibrage de poids selon l'une quelconque des revendications 1 à 4, **caractérisé en ce que** l'unité axiale peut être déplacée au moins verticalement.

6. Dispositif d'équilibrage de poids selon l'une quelconque des revendications 1 à 5, **caractérisé en ce que** l'unité axiale comporte au moins un entraînement linéaire.
